# EUROPÄISCHE PATENTSCHRIFT

(11) **EP 3 836 054 B1**
(45) Veröffentlichungstag und Bekanntmachung des Hinweises auf die Patenterteilung: **11.05.2022**
(21) Anmeldenummer: 20206571.0
(22) Anmeldetag: 10.11.2020
(51) Int. Cl.: G01C 11/02, G06Q 10/08, B64C 39/02, G06K 9/00

(54) **VERWENDUNG EINER FERNGESTEUERTEN DROHNE**
USE OF A REMOTE-CONTROLLED DRONE
UTILISATION D'UN DRONE TÉLÉCOMMANDÉ

(30) Priorität: 13.12.2019 DE 102019219569; 16.12.2019 DE 102019219655
(43) Veröffentlichungstag der Anmeldung: 16.06.2021
(73) Patentinhaber: SMS Group GmbH, 40237 Düsseldorf (DE)
(72) Erfinder: PURSCHE, Thomas, 42119 Wuppertal (DE); HOPP, Paul-Christian, 41464 Neuss (DE); KÜLCHEN, Reiner, 47802 Krefeld (DE); SCHAPS, Lothar, 52525 Heinsberg (DE); THIEL, Norbert, 46537 Dinslaken (DE); HÜLLEN, Ina, 40625 Düsseldorf (DE); ARZBERGER, Matthias, 45470 Mülheim a. d. Ruhr (DE)
(74) Vertreter: Klüppel, Walter

(56) Entgegenhaltungen:
- EP-A1- 3 220 227
- Jasper Pons: "Drone Ready?", http://www.scanman.co.za/, 24. November 2014 (2014-11-24), XP055229073, Gefunden im Internet: URL:http://www.scanman.co.za/downloads/whi tepaperdronereadyscanman.pdf [gefunden am 2015-11-17]
- ZHANG DAYI ET AL: "Autonomous Ultrasonic Inspection Using Unmanned Aerial Vehicle", 2018 IEEE INTERNATIONAL ULTRASONICS SYMPOSIUM (IUS), IEEE, 22 October 2018 (2018-10-22), pages 1-4, XP033479907, DOI: 10.1109/ULTSYM.2018.8579727 [retrieved on 2018-12-17]

## Beschreibung

Die Erfindung betrifft eine ferngesteuerte Drohne und deren Verwendung zum Erfassen und Vermessen von Produkten in einem Materiallager.

Im Stand der Technik sind Materiallager im Bereich der Hüttenindustrie bekannt, beispielsweise zum Lagern von Brammen, Coils oder Blechen. Bei solchen Materiallagern ist es bekannt, die einzelnen Produkte durch einen Mitarbeiter zu vermessen, wobei sich dieser geeigneter Werkzeuge bedient, wie z. B. eines Maßbandes oder einer Karosserielehre. Zum Zweck der Vermessung wird das jeweilige Metallprodukt typischerweise mit Hilfe eines Krans auf eine abseitige Position in dem Materiallager verbracht. Für den Mitarbeiter besteht dabei ein hohes Verletzungspotential, weil die Brammen im Lager oftmals noch eine hohe Temperatur aufweisen, typischerweise einige 100°C. Eine weitere Gefährdung für den Menschen besteht in dem Gewicht der einzelnen Brammen von mehreren Tonnen, insbesondere wenn diese schweren Tonnen mit Hilfe von Krananlagen transportiert werden müssen. Um dieses Risiko zu minimieren, werden die zu untersuchenden Brammen oft in einen separaten Bereich innerhalb des Brammenlagers zugestellt, was aber neben der Gefahr für den Menschen einen hohen logistischen Aufwand nach sich zieht und den Produktionsprozess stört bzw. verzögert. Ein weiterer Nachteil der Brammenvermessung durch einen Menschen ist in der Geschwindigkeit und der Fehlertoleranz zu sehen. Zum einen benötigt eine manuelle Vermessung einen wesentlich längeren Zeitraum als eine bildbasierte Vermessung und zum anderen spiegeln neben einer geeigneten Ausbildung und Einweisung des Menschen in die Handhabung der Messgeräte weiche Faktoren, wie Motivation und Akkuratesse eine große Rolle.

Eine alternative Möglichkeit stellt ein Lasermesssystem dar, welches an einem Brückenportal oder an der Laufkatze eines Portalkrans im Bereich des Lagers angebracht ist. Mit Hilfe des Portalkrans kann das Lasermesssystem in der Luft über das Lager geführt werden und auf diese Weise Produkte, insbesondere Brammen, welche sich unterhalb der Krankatze bzw. des Lasermesssystems oder innerhalb der Krallen des Krans befinden, vermessen; siehe dazu die Publikation unter https:\\www.lase.de/produkte/stahl-logistik/automatisches-brammenlager. html. Nachteilig an diesem Verfahren zum Vermessen einzelner Metallprodukte ist, dass eventuell versteckte Bereiche bei dem Lager existieren, welche aufgrund ihrer baulichen Eigenart nicht durch das Lasermesssystem an der Krankatze erfasst werden können. Darüber hinaus bietet das Lasermesssystem nur eine eingeschränkte Möglichkeit zur Vermessung und Analyse der Oberflächenbeschaffenheit der Metallprodukte, insbesondere bezüglich eventuell vorhandener Oberflächendefekte. Ein weiterer Nachteil bei der Vermessung der Metallprodukte mit Hilfe des Lasermesssystems an der Krankatze ist darin zu sehen, dass dieses System vergleichsweise teuer in der Anschaffung ist und der Einbauaufwand recht hoch ist.

Gemäß der japanischen Patentanmeldung JP 2019 104554 A ist es bekannt, ein Containerlager mit Hilfe von Drohnen zu überwachen. Die Drohne weist ein Positionserfassungssystem auf, welches ausgebildet ist, zum einen die eigene Position der Drohne zu erfassen. Zum anderen kann mit dessen Hilfe ein Container von einer Position zu einer anderen Position transportiert bzw. geführt werden.

Weiterhin offenbart die japanische Patentanmeldung JP 2016 061674 A ebenfalls die Überwachung bzw. das Überfliegen eines Materiallagers mit einer Drohne. Die Drohne weist eine Messeinrichtung auf zum berührungslosen Erfassen der Kontur von Material bzw. Materialansammlungen innerhalb des Lagers aus der Luft. Zu diesem Zweck weist die ferngesteuerte Drohne eine Bildgebungseinrichtung bzw. eine Kamera auf zum vorzugsweise kontinuierlichen bildlichen Erfassen von den Materialsammlungen in dem Lager.

Die Druckschrift Jasper Pons: "Drone Ready?", http://www.scanman.co.za/, 24. November 2014 (2014-11-24), XP055229073, gefunden im Internet: URL: http://www.scanman.co.za/downloads/whitepaperdronereadvscanman.pdf beschreibt die Möglichkeiten zum Einsatz einer Drohne zum Überwachen des Lagerbestandes in einem Materiallager. Konkret wird offenbart, dass sich die Drohne z. B. mit Hilfe des Global Positioning Systems GPS in dem Warenlager orientiert, um dort nach bestimmten Gegenständen zu suchen oder eine kontinuierliche Inventur durchzuführen. Die Drohne kann weiterhin ausgebildet sein, z. B. einen Barcode zu lesen oder Leerplätze in dem Warenlager zu detektieren.

Die europäische Patentanmeldung EP 3 220 227 A1 offenbart ebenfalls ein Inspektionssystem und ein Verfahren zur Durchführung der Inspektion in einem Warenlager in Zusammenarbeit mit einem Gabelstapler. Die dort offenbarte ferngesteuerte Drohne umfasst eine Kamera oder ein Aufzeichnungsgerät zum Erstellen von Bildern, Videos und/oder digitalen Bildern. Daneben kann die Drohne auch einen optischen Sensor, einen akustischen Sensor oder eine Lasereinrichtung aufweisen.

Das Dokument ZHANG DAYI ET AL: "Autonomous Ultrasonic Inspection Using Unmanned Aerial Vehicle"; 2018 IEEE INTERNATIONAL ULTRASONICS SYMPOSIUM (IUS), IEEE, 22. October 2018, Seiten 1- 4, XP033479907, DOI: 10.1109/ULTSYM.2018.8579727 [gefunden am 17.12.2019] offenbart die Verwendung von mindestens einer ferngesteuerten Drohne zum Erfassen und Vermessen von Produkten aus der Luft, wobei die Drohne eine Kamera aufweist zum Erstellen von Luftbildaufnahmen von den Produkten beim Überfliegen und wobei die Luftbildaufnahmen ausgewertet werden im Hinblick auf die äußere Geometrie der Produkte, im Hinblick auf die Oberflächenbeschaffenheit und/oder im Hinblick auf die Position der Produkte in dem Materiallager, wobei die Drohne verwendet wird zum Erfassen der Oberflächentemperatur der Produkte mit Hilfe einer Wärmebildkamera und/oder dass die Drohne verwendet wird zum Erfassen von Defekten oder Anomalien bei den Produkten mit Hilfe einer Ultraschallmesseinrichtung.

Der Erfindung liegt die Aufgabe zugrunde, die bekannte Verwendung von mindestens einer ferngesteuerten Drohne in einem Materiallager dahingehend zu erweitern, dass sie zum Aufbringen von Informationen auf einem überflogenen Produkt verwendet wird.

Diese Aufgabe wird durch die Verwendung gemäß dem neuen Patentanspruch 1 gelöst. Diese neue Verwendung ist dadurch gekennzeichnet, dass die Drohne verwendet wird zum Aufbringen eines Etiketts auf das Produkt mit Hilfe einer Etikettiereinrichtung, wobei das Etikett eine Hauptkomponente mit einem eindeutigen Identifizierungsmerkmal für das jeweilige Produkt aufweist

Der Begriff "Drohne" meint ein ferngesteuertes unbemanntes Luftfahrzeug.

Die erfindungsgemäßen Drohnen werden mit mindestens einem, typischerweise mehreren geeigneten Messsystemen ausgestattet zum Erfassen der äußeren Geometrie, der Oberflächen-Beschaffenheit, der Oberflächen-Temperatur und/oder der Position der Produkte in dem Materiallager und sind somit in der Lage, die gewünschten Vermessungen völlig autonom durchzuführen. Vorteilhafterweise muss sich für die erfindungsgemäß erwünschte Vermessung der Produkte kein Mensch mehr vor Ort in direkter Umgebung der Metallprodukte aufhalten und den beschriebenen Gefahren aussetzen. Durch den Einsatz der geeigneten Messsysteme sind die Drohnen in der Lage, kontaktlos die gewünschten Informationen der jeweiligen Produkte zu ermitteln. Insbesondere muss für die Verwendung der beanspruchten ferngesteuerten Drohne - anders als bei der Durchführung der Vermessung durch einen Menschen - nicht zunächst tagelang gewartet werden bis sich die Produkte, die in einem Stahlwerk typischerweise noch einige 100°C aufweisen, soweit abgekühlt haben, dass sich Menschen bzw. Mitarbeiter überhaupt in Ihrer Nähe aufhalten können. Außerdem müssen die Produkte nicht mehr, wie oben bezüglich des Standes der Technik beschrieben, in eine extra Position verbracht werden, die abseits genug liegt, um die laufende Produktion nicht zu beeinträchtigen. Das technische Problem der Nachrüstbarkeit eines Brammenlogistik- bzw. Überwachungssystems kann durch den beanspruchten Einsatz von Drohnen ebenfalls einfach, schnell und kostengünstig gelöst werden.

Neben mindestens einer Kamera zum Durchführen der oben genannten verschiedenen Messaufgaben kann die erfindungsgemäße Drohne eine Positionserkennungseinrichtung aufweisen zum Erkennen ihrer eigenen Position und/oder der Position der zu erfassenden und zu ermessenden Produkte im Raum bzw. innerhalb des Materiallagers.

Erfindungsgemäß weist die Drohne eine Etikettiereinrichtung auf zum Abringen eines Etiketts (im englischen tag) jeweils auf dem Metallprodukt, vorzugsweise wenn dieses auf eine geeignete Temperatur, z.B. <300°C, insbesondere < 40°C abgekühlt ist. Der angebrachte Tag kann aus mehreren Komponenten bestehen. Die Hauptkomponente beinhaltet ein eindeutiges Identifizierungsmerkmal für ein jeweiliges Produkt.

Weiterhin können die von der Drohne gesammelten Informationen, wie Abmaße, Temperatur, Position, Oberflächenbeschaffenheit etc. des Produktes mit dem Tag gespeichert und vorzugsweise verknüpft werden. Eine weitere Komponente des Tags kann Sensoren für z. B. Temperatur, Feuchtigkeit, Beschleunigung, etc. enthalten, die nach Anbringung des Tags kontinuierlich Messwerte erfassen und speichern. Durch Anbringung solcher Tags auf dem Produkt im Lager können eine Vielzahl an Informationen nicht nur zum Zeitpunkt der Aufbringung, sondern auch darüber hinaus verfolgt werden. So ist eine kontinuierliche Verfolgung bis zur endgültigen Verarbeitung des Metallprodukt möglich.

Vorteilhafterweise wird, je nach Größe des Materiallagers und je nach Anzahl der dort gelagerten Produkte eine Mehrzahl von Drohnen eingesetzt, um die genannten Vermessungs- und Überwachungsaufgaben durchzuführen.

Der Beschreibung sind zwei Figuren beigefügt, wobei
Figur 1 ein Brammenlager; und
Figur 2 den Aufbau einer erfindungsgemäßen Drohne zeigt.

Die Erfindung wird nachfolgend unter Bezugnahme auf die genannten Figuren in Form von Ausführungsbeispielen detailliert beschrieben. In beiden Figuren sind gleiche technische Elemente mit gleichen Bezugszeichen bezeichnet.

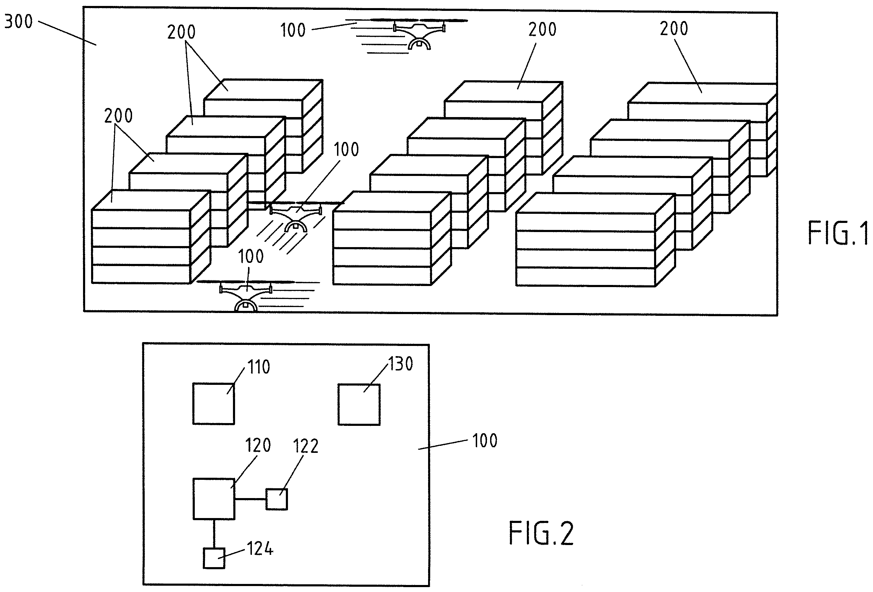

Figur 1 zeigt ein Materiallager 300 in Form eines Brammenlagers, in welchem eine Mehrzahl von Brammen 200 gelagert ist. Das Materiallager 300 wird von mindestens einer Drohne 100, vorzugsweise von einer Mehrzahl dieser Drohnen gleichzeitig überflogen.

Figur 2 symbolisiert die Geräte, mit welchen die Drohne 100 ausgerüstet ist. Zum einen ist die Drohne mit einer Kamera 110 ausgerüstet zum Erstellen von Luftbildaufnahmen von den Produkten 200, insbesondere Brammen beim

Überfliegen des Brammenlagers 300. Die Kamera 110 ist insbesondere in Form eines Laserscanners ausgebildet zum Erfassen der äußeren Geometrie der Metallprodukte bzw. von deren Abmessungen. Alternativ oder zusätzlich kann die Kamera 110 ausgebildet sein in Form einer Time of Flight TOF-Kamera, oder einer Wärmebildkamera zum Erfassen der Oberflächentemperatur des Z Produktes. Weiterhin besitzt die Drohne eine Einrichtung in Form einer Ultraschallmesseinrichtung zum Erfassen von Defekten oder Anomalien bei den Metallprodukten. Mit einer TOF-Kamera können nicht nur Abmessungen der Metallprodukte ermittelt werden, ebenfalls ist die Vermessung der Oberflächenbeschaffenheit und in Kombination mit einer geeigneten Software die Identifikation und Lokalisation von Oberflächendefekten möglich. Neben der Kamera 110 kann die Drohne 100 eine Positionserkennungseinrichtung 120 aufweisen zum Erkennen ihrer eigenen Position und/oder der Position der zu erfassenden und zu vermessenden Produkte im Raum und/oder innerhalb des Materiallagers 300. Bei der Positionserkennungseinrichtung kann es sich um ein Global Positioning System GPS, vorzugsweise in Differenzial GPS handeln. Vorzugsweise steht die Positionserkennungseinrichtung 120 in Verbindung mit mindestens einem Beschleunigungssensor 122 für unterschiedliche Bewegungsrichtungen oder Freiheitsgrade bei der Bewegung der Drohne im Raum und/oder mit einem Gyroskop 124.

Schließlich weist die erfindungsgemäße Drohne 100 eine Etikettiereinrichtung 130 auf zum Anbringen eines Etiketts auf dem Metallprodukt, insbesondere, wenn dieses auf unterhalb einer vorbestimmten Temperatur, z. B. 300°C, besser 40°C abgekühlt ist. Bei dem Etikett kann es sich beispielsweise um eine Überwachungs- oder Verfolgungseinrichtung in Form eines Trackers bzw. Locators, wie beispielsweise einem Radio Frequency Identification (RFID) Transponder handeln. Alternativ oder zusätzlich kann das Etikett in Form eines Informationsetiketts, wie beispielsweise eines scan-fähigen QR-/oder Bar-Code ausgebildet sein.

Die von der Drohne 100 bzw. deren Einrichtungen gewonnenen Daten werden vorzugsweise zur Verwaltung des Lagerbestands bzw. für eine Lagerlogistik des Materiallagers verwendet.

### Bezugszeichenliste

- 100: Drohne
- 110: Kamera
- 120: Positionserkennungseinrichtung
- 122: Beschleunigungssensor
- 124: Gyroskop
- 130: Etikettiereinrichtung
- 200: Produkt, insbesondere Metallprodukt
- 300: Materiallager

## Patentansprüche

1. Verwendung von mindestens einer ferngesteuerten Drohne (100) zum Überfliegen eines Materiallagers (300) zum Erfassen und Vermessen von Produkten (200), die in dem Materiallager (300) gelagert sind, aus der Luft,
wobei die Drohne eine Kamera (110) aufweist zum Erstellen von Luftbildaufnahmen von den Produkten (200) beim Überfliegen des Materiallagers;
wobei die Luftbildaufnahmen auswertbar sind im Hinblick auf die äußere Geometrie der Produkte (200), im Hinblick auf die Oberflächenbeschaffenheit und/oder im Hinblick auf Positionen der Produkte in dem Materiallager; und
wobei die Drohne verwendet wird zum Erfassen von Defekten oder Anomalien bei den Produkten (200) mit Hilfe einer Ultraschallmesseinrichtung;
**dadurch gekennzeichnet,**
**dass** die Drohne verwendet wird zum Überfliegen des Materiallagers (300) in Form eines Brammen-, Coil- und/oder Blechlagers (300) in einem Stahlwerk oder in einer Aluminiumhütte und zum Erfassen und Vermessen der Produkte (200) in Form von Brammen, Coils und/oder Blechen, die in dem Materiallager gelagert sind, und
**dass** die Drohne verwendet wird zum Anbringen eines Etiketts auf die Produkte (200) mit Hilfe einer Etikettiereinrichtung (130), wobei das Etikett eine Hauptkomponente mit einem eindeutigen Identifizierungsmerkmal für das jeweilige Produkt aufweist.

## Claims

1. Use of at least one remotely controlled drone (100) for overflying a materials store (300) for detection and measurement from the air of products (200) stored in the materials store (300), wherein the drone has a camera (110) for creation of aerial recorded images of the products (200) during the overflying of the materials store;
wherein the recorded images can be evaluated with respect to the external geometry of the products (200), with respect to the surface property and/or with respect to positions of the products in the materials store; and
wherein the drone is used for detection of defects or anomalies in the products (200) with the help of an ultrasonic measuring device;
**characterised in that**
the drone is used for overflying the materials store (300) in the form of a slab, coil and/or sheet store (300) in a steelworks or in an aluminium plant and for detection and measuring of the products (200) in the form of slabs, coils and/or sheets which are stored in the materials store, and
the drone is used for application of a label to the products (200) with the help of a labelling device (130), wherein the label has a main component with a unique identification feature for the respective product.

## Revendications

1. Utilisation d'au moins un drone (100) commandé à distance, destiné au survol d'un dépôt de matériel (300) à des fins d'enregistrement et de mesure de produits (200) qui sont entreposés dans le dépôt de matériel (300), à partir du ciel ; dans laquella le drone présente une caméra (110) destinée à la réalisation de prises de vues aériennes des produits (200) au cours du survol du dépôt de matériel ; dans laquelle les prises de vues aériennes peuvent être évaluées en ce qui concerne la géométrie externe des produits (200), en ce qui concerne la qualité superficielle et/ou en ce qui concerne des emplacements des produits dans le dépôt de matériel ; et dans laquelle le drone est utilisé à des fins d'enregistrement de défauts ou d'anomalies en ce qui concerne les produits (200) à l'aide d'un mécanisme de mesure du type à ultrasons ; **caractérisée en ce que** le drone est utilisé à des fins de survol du dépôt de matériel (300) sous la forme d'un dépôt de brames, de bobines et/ou de tôles (300) sur un site sidérurgique ou dans une fonderie d'aluminium et à des fins d'enregistrement et de mesure des produits (200) sous la forme de brames, de bobines et/ou de tôles qui sont entreposés dans le dépôt de matériel, et **en ce que** le drone est utilisé pour l'application d'une étiquette sur les produits (200) à l'aide d'un mécanisme d'étiquetage (130) ; dans laquelle l'étiquette présente un composant principal qui comprend une caractéristique d'identification univoque pour le produit respectif.
